# EUROPEAN PATENT APPLICATION

(11) **EP 1 632 861 A1**
(43) Date of publication of application: **08.03.2006**
(21) Application number: 03736130.0
(22) Date of filing: 10.06.2003
(51) Int. Cl.: G06F 13/00

(54) **USER TERMINAL, SERVER, AND DATA PROVIDING METHOD**

(71) Applicant: FUJITSU LIMITED, Kawasaki-shi, Kanagawa 211-8588 (JP)
(72) Inventor: TAKIYAMA, Shushi FUJITSU PERSONAL COMPUTER SYSTEMS, Inagi-shi, Tokyo 206-0801 (JP)
(74) Representative: Sunderland, James Harry
(86) International application number: PCT/JP2003/007362
(87) International publication number: WO 2004/111862

(57) **Abstract**

A user terminal includes means for requesting a server managing data to transmit data, means for transmitting attribute information defining the data attribute required for the aforementioned data, means for receiving data appropriate for the attribute information, and display means for displaying the received data.

## Description

### TECHNICAL FIELD

The present invention relates to a technologies of sending and receiving data through a network.

### BACKGROUND ART

Recently, various kinds of data (e.g., image data, character data, audio data, etc.) are provided using information apparatus and equipment. For example, there are techniques that provide image data to terminals from the Web through the Internet. In a conventional method of providing image data from the Web, first, a content creator places image data to be provided as a file on the Web. Then, users access the file on the Web to individually download and store the image data in their terminals. Such a method does not deteriorate the originality of provided images, but individual terminals that have downloaded the image data have to process the image data after the downloading so that the image data conforms to their respective predetermined display abilities. Terminals of poor abilities may take a long time to display images, or may even fail to display images because of lack of memory capacity. Furthermore, terminals are unable to display images when display programs running on the terminals do not support the format. This requires, for example, that content creators create images in conformity with the display abilities of individual terminals, and constantly add content data that conform to resolutions usable for newly introduced terminals.

Also, when such image data-is downloaded and printed, the image data, created for display purposes, is not suitable for printing. The downloaded image data therefore exhibits deteriorated quality when printed.

As mentioned above, it has conventionally been difficult to obtain, from the Web, image data that fits terminals' abilities and purposes, and large amounts of wasteful work have been required after the acquisition of image data in order to solve undesired conditions.

Other techniques related to the present invention include the technique disclosed in Patent Document 1.
[Patent Document 1]
JP 2000-198248 A

### DISCLOSURE OF THE INVENTION

The present invention has been made to solve the problems above, and an obj ect of the invention is to provide a technology that enables data obtained through a network to be handled in a form suitable for the ability or purpose of a terminal that would receive the data.

To solve the above mentioned problems, the present invention provides the following structures. That is, the present invention provides a user terminal including: means for requesting transmission of data from a server that manages data; means for transmitting attribute information that defines a data attribute required for the data; means for receiving data that conforms to the attribute information; and display means for displaying the received data.

According to the present invention, a data transmission is requested, attribute information that defines a data attribute required for the data is transmitted, and then data that conforms to the attribute information is received and displayed. The user terminal is thus capable of obtaining and displaying data that meets its own ability and needs.

Further, the user terminal may further include: means for transmitting, to a server that manages data, a data transmission request and attribute information that defines a data attribute required for the data; means for receiving data that conforms to the attribute information; and display means for displaying the received data.

According to the present invention, attribute information that defines a data attribute required for data is transmitted together with a transmission request for that data, and data that conforms to the attribute information is received and displayed. The user terminal is thus capable of obtaining and displaying data that meets its own ability and needs.

The present invention provides a server including: means for receiving attribute information about data transmission-requested by a user terminal; means for converting the data according to the attribute information; and means for transmitting the converted data to the user terminal.

According to the present invention, attribute information about transmission-requested data is received and the data is converted according to the attribute information, and then the converted data is transmitted to the data requesting source. Thus, the server is capable of knowing attribute information about data requested by the data requesting source before transmitting that data, so that the server is capable of providing data that conforms to the request from the data requesting source.

Further, the server may further include: means for requesting transmission of data from a terminal that provides data; means for transmitting attribute information that defines a data attribute required for the data; and means for receiving data that conforms to the attribute information.

According to the present invention, a data transmission is requested, attribute information that defines a data attribute required for the data is transmitted, and then data that conforms to the attribute information is received. The server is thus capable of obtaining data that meets individual ability and needs.

Furthermore, the user terminal may further include: means for receiving attribute information about data transmission-requested by a server; means for converting the data according to the attribute information; and means for transmitting the converted data to the server.

According to the invention, attribute information about transmission-requested data is received and the data is converted according to the attribute information, and then the converted data is transmitted to the data requesting source. Thus, the user terminal is capable of knowing attribute information about data requested by the data requesting source before transmitting the data, so that the user terminal is capable of providing data that conforms to the request from the data requesting source.

As described above, the present invention enables data to be handled in a suitable form conforming to the ability and purpose of a terminal and thus allows efficient data transmission/reception.

According to the invention, a server is capable of transmitting image data optimized according to the purpose, e.g., by transmitting image data with a high resolution to a user terminal when the data is to be printed, and by transmitting image data with a low resolution when the data is just to be displayed.

The present invention may be a method by which computers, other devices or machines, etc. execute any of the operations above. Also, the present invention may be a program that causes computers, other devices or machines, etc. to execute any of the functions above. Also, the present invention may be a recording medium readable by computers etc. which records such a program.

### BRIEF DESCRIPTION OF THE DRAWINGS

FIG. 1 is a diagram illustrating the outlines of a system according to an embodiment of the present invention;
FIG. 2 is a diagram illustrating operations in which a server 2 transmits attribute information when image data is uploaded to the server 2;
FIG. 3 is a diagram showing an example of a user terminal 1 used in this system;
FIG. 4 is a table illustrating the data structure of management information for managing original images 3 registered in the server 2 shown in FIG. 1;
FIG. 5 is a table illustrating the data structure of attribute information stored in the user terminal 1 shown in FIG. 1; and
FIG. 6 is a flowchart illustrating a process of transmitting/receiving image data between the user terminal 1 and the server 1.

### BEST MODE FOR CARRYING OUT THE INVENTION

An embodiment of the present invention will now be described referring to the drawings. The embodiment is presented for illustrative purposes and the configuration of the present invention is not restricted by the description below.

### (Embodiment)

An embodiment for implementing the present- invention will be described referring to the drawings.

### (Outlines)

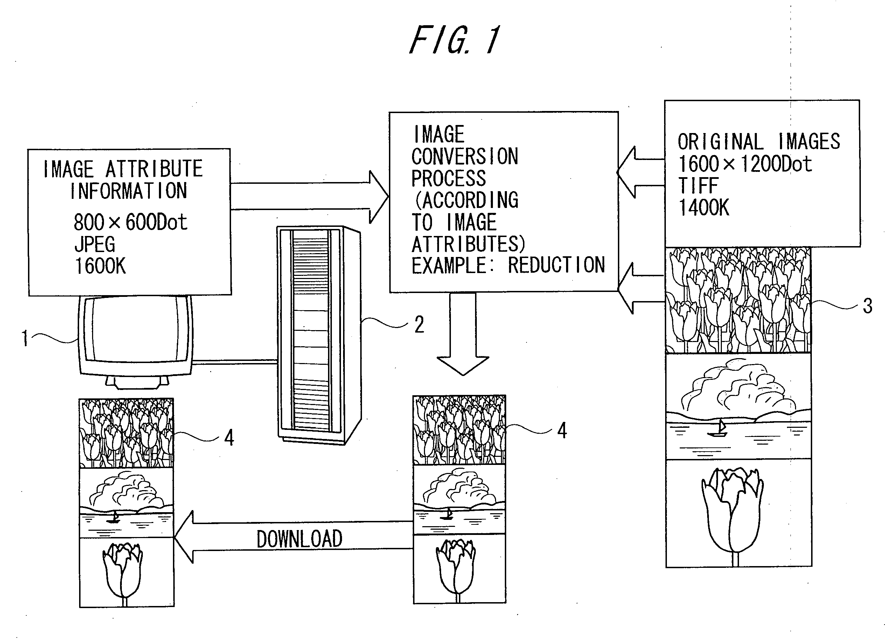

FIG. 1 is a diagram illustrating the outlines of a system according to the embodiment. In the example shown in FIG. 1, the system includes a user terminal 1 and a server 2 that are connected through a network not shown. The network is a common data communications network such as the Internet.

Though not shown in FIG. 1, the user terminal 1 includes a CPU, memory, a display, a manipulation unit, a communication unit, etc. The user terminal 1 may be a personal computer or a PDA (Personal Digital (Data) Assistants), for example. The display may be a liquid-crystal display, a CRT, or a plasma display, for example. The manipulation unit may be a push-button dial, a mouse, a trackball, a joystick, or a keyboard, for example.

The components and functions of personal computers are not specifically described herein as they are widely known. However, the user terminal 1 may be an apparatus for displaying image data taken by a digital camera etc., such as an electronic photography display apparatus (e.g., a so-called electronic photo frame). The configuration of the electronic photography display apparatus is not described herein because it is basically the same as that of a personal computer.

Though not shown in FIG. 1, the server 2 includes a CPU, memory, an external storage, a manipulation section, a communication section, etc. The server 2 is also a common computer and is not specifically described herein. The external storage may be a hard disk or a DVD, for example.

The outlines of functions of the system including the user terminal 1 and the server 2 will be described below referring to FIG. 1. It is assumed in the description that the user terminal 1 accesses the server 2 through the network and downloads image data. The downloading may be executed by a program that is regularly activated on the user terminal 1.

In the user terminal 1, attribute information, requested for downloaded image data, is previously created and stored. The attribute information may be created according to the purpose or according to the hardware specifications etc. of the user terminal 1. The attribute information may contain any pieces of information that are desired for the downloaded image data. For example, the attribute information may contain image resolution, color, brightness, and brilliance correction values, color temperature, file (compression) format, keywords indicating the contents or genre of the image, hash value specifying the file, etc. In the server 2, one or more pieces of image data and management information related to the image data are registered.

The user terminal 1 sends the attribute information to the server 2 together with an image data request (access). In the example shown in FIG. 1, the user terminal 1 sends to the server 2 the attribute information including "resolution: 800 × 600 dots", "format: JPEG", and "color temperature: 1600 K (kelvins)". The attribute information may be sent as initialization information at the time of creation, or may be sent only when the information is changed.

The server 2 receives the image data request and the attribute information. Then, according to the received attribute information, the server 2 converts (processes) registered original images 3 that correspond to the requested image data. In the example of FIG. 1, the original images 3 with "resolution: 1600 × 1200 dots", "format: TIFF", and "color temperature: 1400 K" are registered in the server 2 as the image data corresponding to the image data request. The original images 3 are reduced to original images 4 through a conversion process. The server 2 may contain already converted image data in a file. That is, the server 2 may store, in the file, image data that has been already converted on the basis of the received image data request and attribute information, and retrieve the image data when required. The converted image data 4 is transmitted (downloaded) from the server 2 to the user terminal 1.

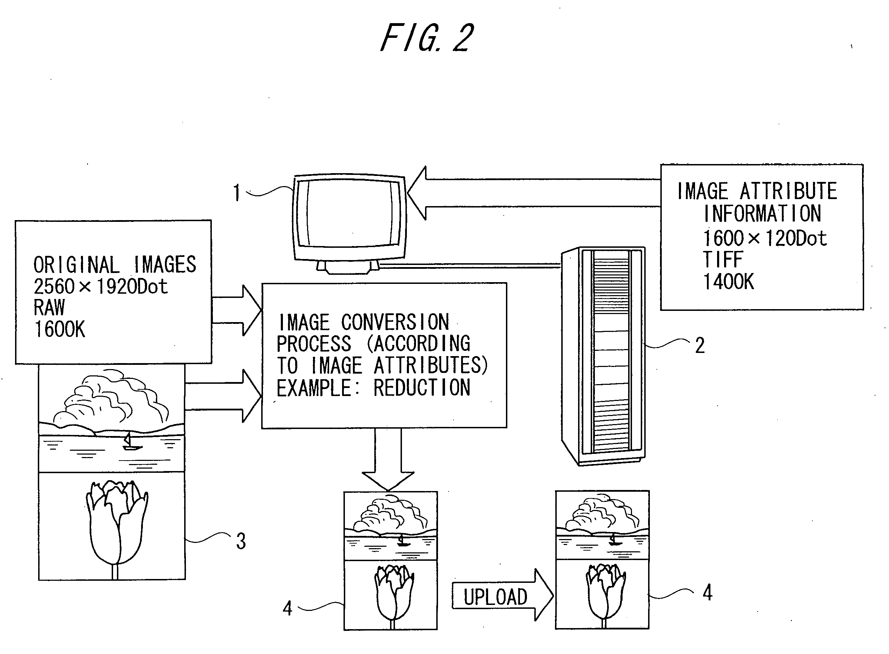

While the description above has been made with reference to FIG. 1, the system may function as shown in FIG. 2. FIG. 2 is a diagram illustrating operations in which the server 2 transmits attribute information when image data is uploaded to the server 2. The uploading may be implemented by a program that is regularly activated on the user terminal 1, for example.

First, the server 2 sends attribute information to the user terminal 1 together with an image data request (which may be referred to also as a data transmission request). In the example shown in FIG. 2, the server 2 sends to the user terminal 1 the attribute information including"resolution:1600x1200 dots","format:TIFF", and "color temperature: 1400 K". Then, according to the received attribute information, the user terminal 1 converts (processes) original images 3 to be uploaded and stored in a memory card inserted therein or in the memory of the user terminal 1. The example of FIG. 2 shows the original images 3 to be uploaded, with "resolution: 2560 × 1920 dots", "format: RAW", and "color temperature: 1600 K". The original images 3 are reduced to original images 4 as a result of the conversion. The converted image data 4 is transmitted (uploaded) from the user terminal 1 to the server 2. The transmitted image data is stored and managed in the memory of the server 2. The server 2 may save the transmitted images with their resolution, format, etc. modified according to the purpose.

### (Example of Terminal)

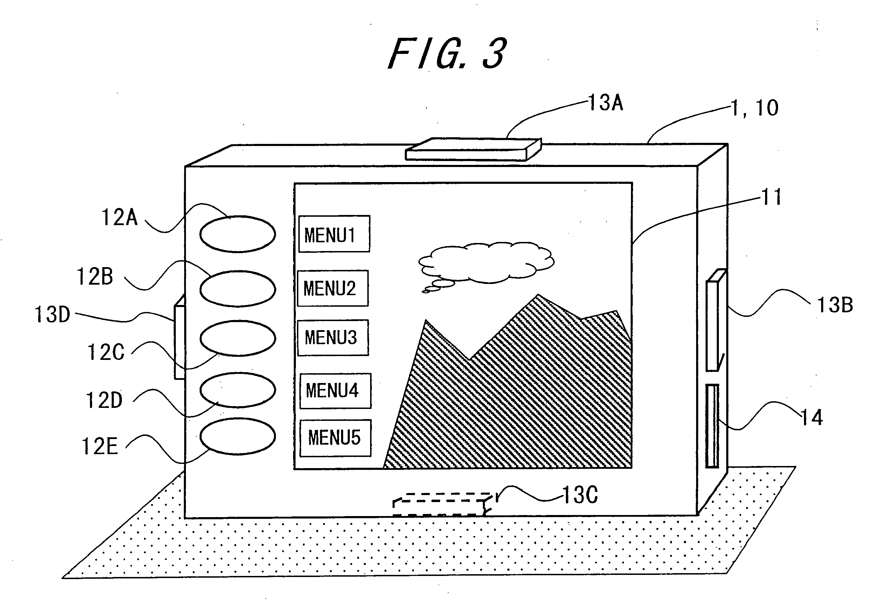

FIGS. 1 and 2 assume the user terminal 1 to be an information device such as a personal computer or a PDA. However, in this system, the user terminal 1 is not limited to these information devices. FIG. 3 shows another example of the user terminal 1. The user terminal 1 is a so-called electronic photo frame, which has a function of downloading image data from the server 2 and displaying those images. The user terminal 1 will be described below mainly about its functions related to the embodiment.

The user terminal 1 includes a display 11, push-buttons 12A to 12E, and installed direction detecting sensors 13A to 13D,all of which are accommodated in a housing 10.

The display 11 may be a liquid-crystal display, a plasma display, or an EL (ElectroLuminescent) panel, for example. The display 11 displays images downloaded from the server 2 and also displays menus (MENU1 to MENU5 in FIG. 3).

These menus may be executed by depressing the push-buttons 12A to 12E. Processes corresponding to these menus may include setting and changing of image attribute information, uploading of images and attribute information to the server 2, and so on. The user terminal 1 may be provided with an interface 14 for a detachable medium, such as a CD (Compact Disk), a DVD, a flash memory card, etc., and the user terminal 1 may display images read from the medium or upload the images to the server 2.

The menus may be set so that they do not appear on the screen. Also, the menus, set not to appear, may be displayed on the screen by detecting an operation of the push-button 12A by the user, for example.

### (Data Structure)

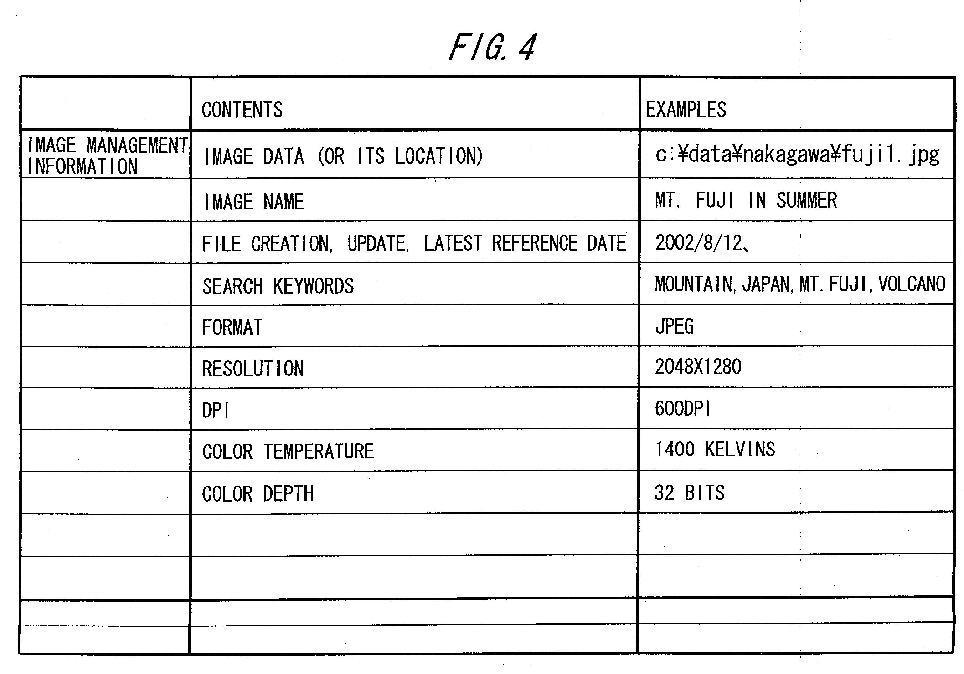

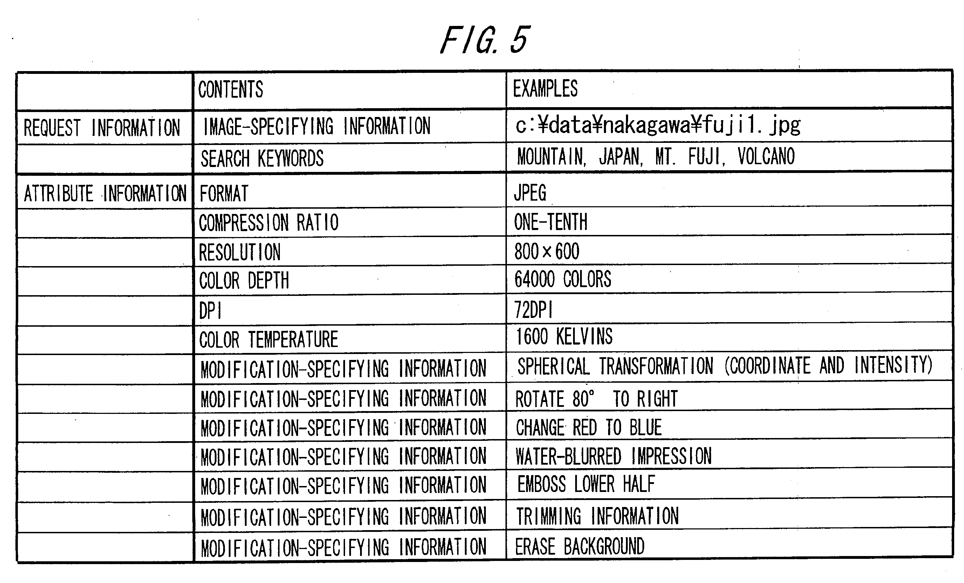

FIG. 4 is a table illustrating the data structure of the management information for managing the original images 3 registered in the server 2 shown in FIG. 1. This management information is created for each image. In the example shown in FIG. 4, the management information includes image data (or its location), image name (e.g., Mt. Fuji in summer), date of file creation, updating, latest reference (e.g., 08/12/2000), search keywords (e.g., mountain, Japan, Mt. Fuji, volcano, etc.), format (e.g., JPEG), resolution (e.g., 2048 × 1280), DPI (e.g., 600 DPI (Dots Per Inch)), color temperature (e.g., 1400 kelvins), and color depth (32 bits). In the management information, the image information may be directly stored in the image data section, or the image information may be stored in another file etc. and the location of that file etc. may be stored in the section. In the example of FIG. 5, the image information itself is stored in another file (e.g., c:¥data¥nakagawa¥fuji1.jpg). The search keywords include keywords that represent the contents or genre of the image.

FIG. 5 is a table illustrating the data structure of requesting information stored in the user terminal 1 shown in FIG. 1. The requesting information contains information for requesting image transmission (hereinafter referred to as request information) and information about processes of converting the requested image (hereinafter referred to as attribute information). In the example of FIG. 4, the request information includes information that specifies the image (e.g., the location where the file is stored: c¥data¥nakagawa¥fuji1.jpg) and search keywords (e.g., mountain, Japan, Mt. Fuji, volcano, etc.). The attribute information includes format (e.g., JPEG), compression ratio (e.g., one-tenth), resolution (e.g., 800 × 600), color depth (e.g., 64000 colors), DPI (e.g., 72 DPI), color temperature (e.g., 1600 kelvins), and modification specifying information. The modification specifying information includes pieces of information that specify how the image should be modified. For example, the modification specifying information may be information for processing the image by applying spherical transformation (coordinates and intensity), rotating the image by 80° to the right, changing red to blue, making the image look as if it were blurred with water, embossing the lower half, trimming the lower end, and erasing the background. The modification specifying information is described in a command format that is interpretable by the data communications programs executed in the user terminal 1 and the server 2.

### (Functions)

In this system, the user terminal 1 and the server 2 cooperate and share files. That is, the user terminal 1 and the server 2 on a regular schedule compare files existing in their respective shared areas. Then, for example, when a file in a download target area on the server 2 is not contained in the user terminal 1, the file is downloaded to the user terminal 1 from the server 2. Also, when a file as a target of uploading on the user terminal 1 is not present on the server 2, that file is uploaded. Such processing is called file sharing synchronous operation.

### (Process Flow)

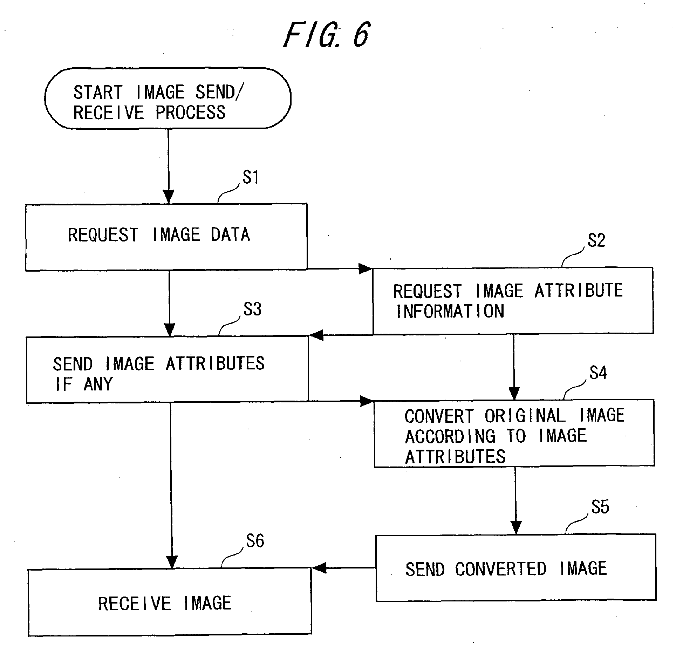

Next, a specific process performed by the user terminal 1 and the server 2 will be described referring to FIG. 6. FIG. 6 is a flowchart showing a process of sending/receiving image data between the user terminal 1 and the server 2. In FIG. 6, the vertical arrows show process steps performed by the server 2 or the user terminal 1, and the lateral arrows show communications between the user terminal 1 and the server 2. The image data sending/receivingprocess may be executed during a file sharing synchronous operation by cooperation of the user terminal 1 and the server 2, or may be executed when a user operates the menu using the terminal 1 illustrated in FIG. 3.

First, the user terminal 1 requests image data from the server 2 (S1). Requesting image data means requesting transmission of image data. In this step, the request information shown in FIG. 5 is transmitted, for example. The server 2 receives the request for image data and then requests the user terminal 1 to send attribute information about the image (S2). That is, the server 1 inquires of the user terminal 1 about desired attributes of the image.

Next, when some attributes are demanded for the requested image data, the user terminal 1 transmits the attribute information (S3). The attributes are properties etc. that the image data should conform to. Here, for example, some pieces of the attribute information shown in FIG. 5 are transmitted. According to the received attribute information, the server 2 converts the original image 3 that corresponds to the request (S4). Here, for example, on the basis of the request information (search keywords) shown in FIG. 5, an original image that corresponds to the search keywords in the management information shown in FIG. 4 is converted according to the received image attribute information. In this process, the server 2 may register the converted image in its own memory.

The server 2 transmits the converted image to the user terminal 1 (S5). The user terminal 1 receives the image from the server 2 (S6). Thus, the user terminal 1 receives the requested image in a desired form.

While the description above has been made assuming that the server 2 downloads image data to the user terminal 1, similar operations are performed when the user terminal 1 uploads image data to the server 2. That is, similarly, the server 2 is capable of receiving requested image data in a desired form.

Also, while the image data sending/receiving process above carries out the image data transmission request (S1) and the transmission of attribute information required for the image data (S3) in different steps, the two operations may be performed in the same step (in a single transmission request). That is, required attribute information may be transmitted together with the image data transmission request.

According to the embodiment, when the user terminal 1 requests image data from the server 2, the user terminal 1 sends to the server 2 attribute information about the desired image before the server 2 downloads the image data to the user terminal 1, so that the user terminal 1 can obtain and display an image that conforms to its ability and needs.

Also, according to the embodiment, when the server 2 requests image data from the user terminal 1, the server 2 sends to the user terminal 1 desired image attribute information before the user terminal 1 uploads image data to the server 2, so that the server 2 can store and manage images that conform to the purposes.

Also, according to the embodiment, the user terminal 1 and the server 2 are capable of easily sharing image data by conducting the processing above during a file sharing synchronous operation.

### (Modifications)

The embodiment above assumes transmission/reception of image data. However, the present invention is not restricted by the type of data. For example, the data can be character data or audio data. That is, the data may be any data that can be provided through a network.

### (Recording Media Readable for Computers etc.)

A program that causes computers, other devices or machines, etc. (hereinafter referred to as computers etc.) to implement any of the functions described above may be recorded in recording media readable by computers etc. Then, the computers etc. read the program from the recording media and execute the program to provide the functions.

The recording media readable for computers etc. include media that are capable of electrically, magnetically, optically, mechanically, or chemically storing information, such as data and programs, and that are readable from computers etc. Examples of such recording media that are detachable from computers etc. include floppy disks (registered trademark),magneto-opticaldisks,CD-ROMs, CD-R/Ws, DVDs, DATs, 8-mm tapes, memory cards, etc.

Examples of such recording media that are fixed in computers etc. include hard disks, ROMs (Read Only Memories), etc.

### INDUSTRIAL APPLICABILITY

The present invention is applicable to industries that produce information devices and machines of various kinds and to service industries that utilize various information devices and machines.

## Claims

1. A user terminal comprising:
means for requesting transmission of data from a server that manages data;
means for transmitting attribute information that defines a data attribute required for the data;
means for receiving data that conforms to the attribute information; and
display means for displaying the received data.

2. A user terminal comprising:
means for transmitting, to a server that manages data, a data transmission request and attribute information that defines a data attribute required for the data;
means for receiving data that conforms to the attribute information; and
display means for displaying the received data.

3. A server comprising:
means for receiving attribute information about data transmission-requested by a user terminal;
means for converting the data according to the attribute information; and
means for transmitting the converted data to the user terminal.

4. A server comprising:
means for requesting transmission of data from a terminal that provides data;
means for transmitting attribute information that defines a data attribute required for the data; and
means for receiving data that conforms to the attribute information.

5. A user terminal comprising:
means for receiving attribute information about data transmission-requested by a server;
means for converting the data according to the attribute information; and
means for transmitting the converted data to the server.

6. A computer-executable program, comprising:
a step of requesting transmission of data from a server that manages data;
a step of transmitting attribute information that defines a data attribute required for the data;
a step of receiving data that conforms to the attribute information; and
a display step of displaying the received data.

7. A computer-executable program, comprising:
a step of transmitting, to a server that manages data, a data transmission request and attribute information that defines a data attribute required for the data;
a step of receiving data that conforms to the attribute information; and
a display step of displaying the received data.

8. A computer-executable program, comprising:
a step of receiving attribute information about data transmission-requested by a user terminal;
a step of converting the data according to the attribute information; and
a step of transmitting the converted data to the user terminal.

9. A computer-executable program, comprising:
a step of requesting transmission of data from a terminal that provides data;
a step of transmitting attribute information that defines a data attribute required for the data; and
a step of receiving data that conforms to the attribute information.

10. A computer-executable program, comprising:
a step of receiving attribute information about data transmission-requested by a server;
a step of converting the data according to the attribute information; and
a step of transmitting the converted data to the server.

11. A data providing method for a server, the method comprising:
a step of receiving attribute information about data transmission-requested by a user terminal;
a step of converting the data according to the attribute information; and
a step of transmitting the converted data to the user terminal.

12. A data providing method for a server, the method comprising:
a step of requesting transmission of data from a terminal that provides data;
a step of transmitting attribute information that defines a data attribute required for the data; and
a step of receiving data that conforms to the attribute information.
